# EUROPEAN PATENT APPLICATION

(11) **EP 3 352 349 A1**
(43) Date of publication of application: **25.07.2018**
(21) Application number: 16846259.6
(22) Date of filing: 31.08.2016
(51) Int. Cl.: H02K 41/03, H02K 41/02

(54) **LINEAR MOTOR AND LINEAR ACTUATOR PROVIDED WITH SAME**

(30) Priority: 16.09.2015 JP 2015182836
(71) Applicant: KYB Corporation, Tokyo 105-6111 (JP); National Institute of Technology, Hachioji, Tokyo 193-0834 (JP)
(72) Inventor: SATOU, Kousuke, Tokyo 105-6111 (JP); KANO, Yoshiaki, Toyota-shi Aichi 471-8525 (JP)
(74) Representative: Grünecker Patent- und Rechtsanwälte PartG mbB
(86) International application number: PCT/JP2016/075533
(87) International publication number: WO 2017/047388

(57) **Abstract**

A linear motor (30) includes a hollow cylindrical core (50), a shaft (40) having a shape of a cylindrical tube, and a sleeve (60, 61, 65). A plurality of coils (51) are arranged at axial intervals at the inner circumferential side of the core (50). A plurality of permanent magnets (41) are arranged at axial intervals in the shaft (40). The shaft (40) is axially movable inside the core (50). The sleeve (60, 61, 65) is formed from a non-magnetic element, and disposed between the core (50) and the shaft (40) over the entire length of the core (50).

## Description

### TECHNICAL FIELD

The present invention relates to a linear motor that is extended and contracted axially by an electromagnetic force, and to a linear actuator having the linear motor.

### BACKGROUND ART

JP 2005-204449A describes a linear motor that includes a core having a plurality of coils, and a shaft having a plurality of permanent magnets. The shaft moves axially relative to the core when a current is supplied to the coils. The linear motor disclosed in JP 2005-204449A also includes sleeves that are disposed at both axial ends of the core. Between the two sleeves that are disposed at both ends of the core, a gap corresponding to the thickness of the sleeves is present between the shaft and the core. This prevents the core from coming into contact with and sticking to the shaft.

### SUMMARY OF INVENTION

If the gap between the shaft and the core varies in a circumferential direction of the shaft, the force that pulls the shaft and the core toward each other increases in areas where the gap is small. Thus, when the sleeves are disposed only at both ends of the core, there is a possibility that the shaft becomes eccentric between the two sleeves. Such eccentricity of the shaft makes a magnetic field of the core, which acts on the shaft, bias in the circumferential direction of the shaft, and prevents effective transmission of a change in the magnetic field of the core to the shaft. As a result, a driving force of the linear motor is reduced.

The present invention aims to improve the driving forces of a linear motor and a linear actuator having the linear motor by suppressing eccentricity of a shaft.

According to one aspect of the present invention, a linear motor includes a hollow cylindrical core having a plurality of coils arranged at axial intervals at an inner circumferential side thereof; a shaft having a plurality of permanent magnets axially aligned therein, the shaft being axially movable inside the core; and a sleeve formed from a non-magnetic element, the sleeve being disposed between the core and the shaft over an entire length of the core.

### BRIEF DESCRIPTION OF DRAWINGS

FIG. 1 is an axial cross-sectional view showing a linear motor and a linear actuator according to an embodiment of the present invention;
FIG. 2 is an enlarged view showing the section II of FIG. 1;
FIG. 3 is a cross-sectional view taken along the line III-III in FIG. 1;
FIG. 4 is a cross-sectional view showing a first exemplary modification of the linear motor and the linear actuator according to the embodiment of the present invention; and
FIG. 5 is a cross-sectional view showing a second exemplary modification of the linear motor and the linear actuator according to the embodiment of the present invention.

### DESCRIPTION OF EMBODIMENTS

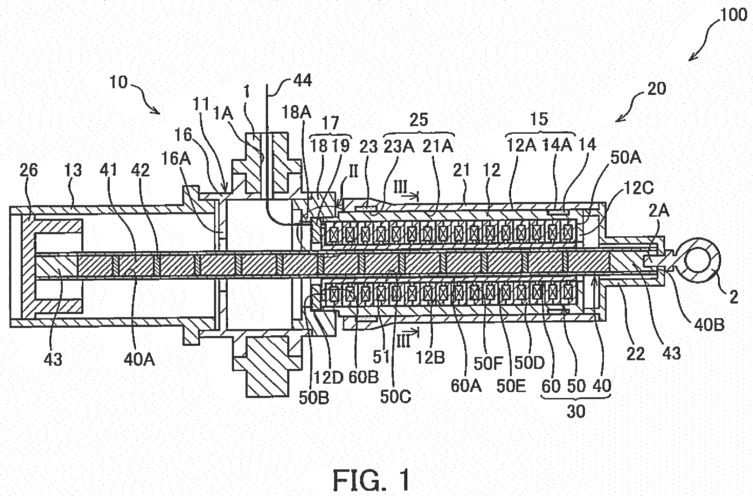

The following describes a linear motor 30 according to an embodiment of the present invention and a linear actuator 100 having the linear motor 30 with reference to FIG. 1.

The linear motor 30 is a driving source for the linear actuator 100, and includes a hollow cylindrical core 50, a cylindrical tubular shaft 40, and a sleeve 60. A plurality of coils 51 are arranged at axial intervals at the inner circumferential side of the core 50. A plurality of permanent magnets 41 are arranged at axial intervals in the shaft 40. The shaft 40 is axially movable inside the core 50. The sleeve 60 is formed from a non-magnetic element, and disposed between the core 50 and the shaft 40 over the substantially entire length of the core 50.

The linear actuator 100 includes a first tube 10 that is fixed to the core 50 of the linear motor 30, and a second tube 20 that is slidably mounted on an outer circumference of the first tube 10 and is fixed to the shaft 40 of the linear motor 30.

The linear motor 30 generates a thrust (an electromagnetic force) that drives the shaft 40 axially in accordance with a current supplied to the coils 51. The first tube 10 and the second tube 20 of the linear actuator 100 are displaced relative to each other by the thrust generated by the linear motor 30. Note that FIG. 1 shows the linear actuator 100 in a fully contracted state.

The first tube 10 includes a hollow cylindrical base portion 11, an inner tube 12 coupled to one end side of the base portion 11, and a guide tube 13 coupled to the other end side of the base portion 11.

The base portion 11 is a tubular member that is open at both ends. The base portion 11 includes a base main body 16 coupled to the guide tube 13, and an adapter portion 17 via which the base main body 16 and the inner tube 12 are connected to each other. A ring-shaped stopper portion 16A that projects radially inward is provided on an inner circumference of the base main body 16.

A pair of trunnion shafts 1 is fixed to an outer circumference of the base main body 16. The pair of trunnion shafts 1 serves as a first joint portion that projects radially. The pair of trunnion shafts 1 is rotatably supported by a non-illustrated external member. Accordingly, the linear actuator 100 is held so as to be rotatable with respect to the external member. One of the pair of trunnion shafts 1 has a through hole 1A.

The inner tube 12 is a tubular member that is coupled to the adapter portion 17 at one end, and has a restriction portion 12C at the other end. The restriction portion 12C has a shape of a circular ring, and projects radially inward from an inner circumferential surface 12B of the inner tube 12. The restriction portion 12C is intended to define an axial position of the core 50 that is inserted into the inner circumferential surface 12B of the inner tube 12.

The adapter portion 17 includes an adapter main body 18 via which the base main body 16 and the inner tube 12 are joined to each other, and a wire guiding plate 19 disposed between the adapter main body 18 and the inner tube 12.

A pressing portion 18A that projects radially inward is provided on an inner circumferential surface of the adapter main body 18. The pressing portion 18A is formed at a position that oppose an end surface 12D of the inner tube 12 coupled to the adapter main body 18.

The wire guiding plate 19 is disposed between the pressing portion 18A of the adapter main body 18 and the end surface 12D of the inner tube 12. The wire guiding plate 19 is also provided, together with the pressing portion 18A, so as to press and fix the core 50 in place inside the inner tube 12. A non-illustrated groove portion into which wires 44 from the coils 51 are inserted is provided at the outer circumferential side of the wire guiding plate 19.

The guide tube 13 is a tubular member that is coupled to the base main body 16 at one end. Regarding the mechanism for coupling the inner tube 12 and the adapter portion 17 to each other, they may be screwed to each other, or may be fitted to each other. The same goes for the mechanism for coupling the adapter portion 17 and the base main body 16 to each other, and the mechanism for coupling the adapter portion 17 and the guide tube 13 to each other.

The second tube 20 includes a hollow cylindrical outer tube 21 and a cap 22. The outer tube 21 is open at both ends, and the inner tube 12 of the first tube 10 is slidably inserted into the outer tube 21 from one end side of the outer tube 21. The cap 22 is coupled to and closes the other end of the outer tube 21.

A joint member 2 is fixed to an outer side surface of the cap 22. The joint member 2 serves as a second joint portion that is joined to a non-illustrated external device. Regarding the mechanism for coupling the outer tube 21 and the cap 22 to each other, they may be screwed to each other, or may be fitted to each other. The outer tube 21 and the cap 22 may be formed integrally.

The linear actuator 100 further includes a first linear guide portion 15 and a second linear guide portion 25 that support the first tube 10 and the second tube 20 in such a manner that the first tube 10 and the second tube 20 can be axially displaced relative to each other.

A ring-shaped first bearing 14 is provided on an outer circumference of the free end side of the inner tube 12. A bearing surface (an outer circumferential surface) 14A of the first bearing 14 is in sliding contact with an inner circumferential surface 21A of the outer tube 21. The first linear guide portion 15 is composed of an outer circumferential surface 12A of the inner tube 12 and the bearing surface 14A of the first bearing 14.

A ring-shaped second bearing 23 is provided on an inner circumference of the open end side of the outer tube 21. A bearing surface (an inner circumferential surface) 23A of the second bearing 23 is in sliding contact with the outer circumferential surface 12A of the inner tube 12. The second linear guide portion 25 is composed of the inner circumferential surface 21A of the outer tube 21 and the bearing surface 23A of the second bearing 23.

During the extension and contraction of the linear actuator 100, in the first linear guide portion 15, the bearing surface 14A of the first bearing 14 is in sliding contact with the inner circumferential surface 21A of the outer tube 21. On the other hand, in the second linear guide portion 25, the bearing surface 23A of the second bearing 23 is in sliding contact with the outer circumferential surface 12A of the inner tube 12. Therefore, the inner tube 12 and the outer tube 21 smoothly slide on each other. The outer circumferential surface 12A of the inner tube 12 and the inner circumferential surface 21A of the outer tube 21 oppose each other, without any gap between them, via the first bearing 14 and the second bearing 23.

The shaft 40 is a cylindrical tube member with a hollow portion 40A. One end of the shaft 40 is fixed to the cap 22 of the second tube 20 by a screw portion 2A of the joint member 2. The other end of the shaft 40 is fixed to a rod guide 26 that is slidably placed inside the guide tube 13. As the rod guide 26 is mounted on the other end of the shaft 40, the coaxiality of the guide tube 13 and the shaft 40 are ensured. Therefore, the end portions of the shaft 40 are prevented from swinging in a radial direction during the extension and contraction of the linear actuator 100. Although the shaft 40 is fixed to the cap 22 by the screw portion 2A of the joint member 2, the shaft 40 may alternatively be fixed to the cap 22 by a coupling member that is different from the joint member 2, in which case the joint member 2 and the cap 22 may be formed integrally.

A plurality of permanent magnets 41 that are axially aligned and held in the hollow portion 40A of the shaft 40. Each permanent magnet 41 has a columnar shape, and is magnetized in such a manner that its N pole and S pole are positioned along an axial direction. Neighboring permanent magnets 41 are disposed in such a manner that their ends of the same polarity oppose each other. Furthermore, a yoke 42 is disposed between neighboring permanent magnets 41. Inside the hollow portion 40A, non-magnetic elements 43 are disposed at both ends of the hollow portion 40A. The shaft 40 is fixed to the cap 22 and the rod guide 26 via the non-magnetic elements 43. Note that the shaft 40 may be formed by simply joining the permanent magnets 41 and the yokes 42 together without providing a casing that covers the outer circumferential surfaces of the permanent magnets 41 and the yokes 42. Alternatively, the yokes 42 may not be provided, in which case neighboring permanent magnets 41 may be in contact with each other.

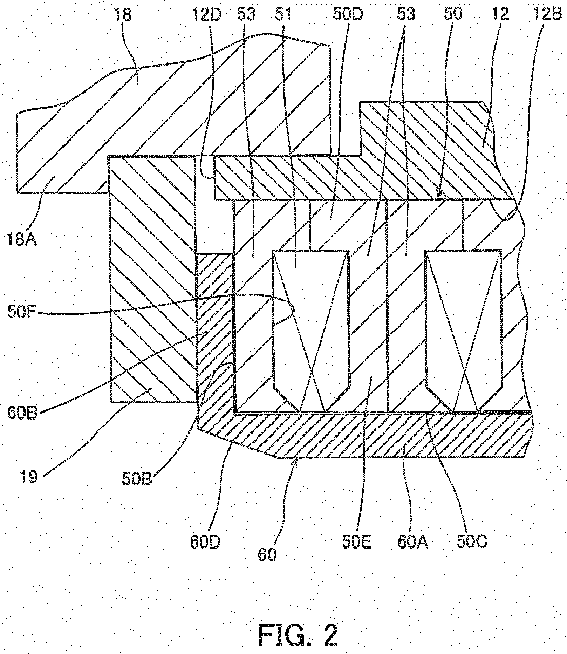

A description is now given of the core 50 with reference to FIGs. 1 and 2. FIG. 2 is an enlarged view showing a section enclosed by a circle indicated by II in FIG. 1. For the sake of explanation, the shaft 40 is not illustrated in FIG. 2.

The core 50 is a hollow cylindrical member formed from a plurality of circular ring members 53 that are axially stacked, and is inserted into the inner circumferential surface 12B of the inner tube 12. The core 50 has one end surface 50A that is in contact with the restriction portion 12C, the other end surface 50B that is located near the wire guiding plate 19, an inner circumferential surface 50C into which the sleeve 60 is inserted, a back yoke portion 50D that extends axially at the outer circumferential side, a plurality of teeth portions 50E that each have a shape of a circular ring and project radially inward from the back yoke portion 50D, a plurality of slot portions 50F, and coils 51 that each have a shape of a circular ring and are placed inside the slot portions 50F. Each of the slot portions 50F is surrounded by the back yoke portion 50D and the corresponding teeth portions 50E, and serves as a space that opens to the inner circumferential surface 50C. Note that the core 50 is not limited to being formed from a plurality of stacked members, and may be formed from a single member.

As shown in FIG. 2, each coil 51 is placed inside the corresponding slot portion 50F by being held between two circular ring members 53. When a current is supplied to the coils 51 placed inside the slot portions 50F, a magnetic field is generated around the coils 51, and a magnetic path is formed in the back yoke portion 50D and the teeth portions 50E.

Generally, inside each slot portion 50F, the coil 51 does not occupy an area near the tips of the teeth portions 50E; in this way, the coils 51 can be prevented from getting cut by coming into contact with the shaft 40. However, in the present embodiment, as the sleeve 60 is disposed between the core 50 and the shaft 40, the coils 51 do not come into direct contact with the shaft 40. Thus, there is no possibility that the coils 51 are cut by the shaft 40. For this reason, the coils 51 are placed in abutment with the inner circumferential surface 50C of the core 50 as shown in FIG. 2. Specifically, each coil 51 fills an entirety of a space extending from the back yoke portion 50D to the inner circumferential surface 50C that is flush with the surfaces of the tips of the teeth portions 50E.

As the sleeve 60 is thus disposed between the coils 51 and the shaft 40, the spaces in which the coils 51 can be placed are enlarged, and the number of turns in each coil 51 can be increased. Provided that the same amount of current is supplied, an increase in the number of turns in each coil 51 leads to an increase in the strength of the magnetic field generated by the coils 51, thereby improving a driving force of the linear motor 30. In addition, as the coils 51 are placed in abutment with the inner circumferential surface 50C, the distance between the coils 51 and the shaft 40 is shortened. This can also improve the driving force of the linear motor 30.

A plurality of non-illustrated grooves extending along the direction of an axis line are provided at circumferential intervals on an outer circumference of the core 50 that is in contact with the inner circumferential surface 12B of the inner tube 12. The wires 44 from the coils 51 are routed in the grooves. The wires 44 are drawn to the outside via the wire guiding plate 19 and the through hole 1A, and connected to a non-illustrated controller. The controller controls the thrust generated by the linear motor 30 and the directions of the generated thrust (the extension and contraction directions) by controlling the intensity and phase of the current supplied to the coils 51.

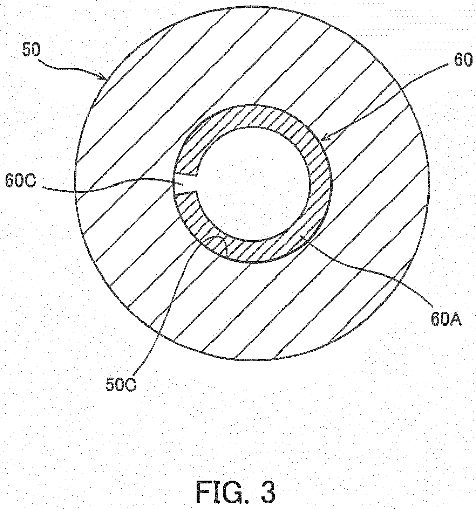

A description is now given of the sleeve 60 with reference to FIGs. 1 to 3. FIG. 3 is an enlarged cross-sectional view taken along the line III-III in FIG. 1. For the sake of explanation, members other than the sleeve 60 and the core 50 are not illustrated in FIG. 3.

The sleeve 60 is a tubular member, and includes a tube portion 60A and a flange portion 60B. The tube portion 60A is inserted into the inner circumferential surface 50C of the core 50. The flange portion 60B is provided at one end of the tube portion 60A, and projects radially outward. The sleeve 60 is formed from a so-called non-magnetic element, which is not a material that is easily magnetized like a ferromagnetic element. One example of the material of the sleeve 60 is resin with high strength and high heat resistance, such as engineering plastic.

As described above, the sleeve 60 formed from a non-magnetic element is disposed between the core 50 and the shaft 40 over the substantially entire length of the core 50. This restricts a radial displacement of the shaft 40, that is, pulling of the shaft 40 toward the core 50. In other words, due to the presence of the sleeve 60, a gap between the core 50 and the shaft 40 is kept substantially constant across the entire length of the core 50, and eccentricity of the shaft 40 is restrained. As long as the shaft 40 is not decentered, the magnetic field generated by the core 50 acts uniformly on the shaft 40, thereby improving the driving force of the linear motor 30.

Although the sleeve 60 is disposed over the entire length of the core 50, it does not mean that the axial length of the sleeve 60 and the axial length of the core 50 exactly match. For example, the axial length of the sleeve 60 may be somewhat smaller than the axial length of the core 50 as long as the gap between the core 50 and the shaft 40 is kept substantially constant across the entire length of the core 50 due to the presence of the sleeve 60. That is, the axial length of the sleeve 60 may be somewhat different from the axial length of the core 50 as long as the advantageous effects are achieved that pulling of the shaft 40 toward the core 50 is restricted and eccentricity of the shaft 40 is restrained.

The sleeve 60 may be made of a material that has a relative permeability greater than one and equal to or less than ten after processing, such as austenitic stainless steel. In a case where the sleeve 60 is made of a material with a relative permeability greater than one and equal to or less than ten, magnetic resistance between the core 50 and the shaft 40 is reduced compared with a case where the sleeve 60 is made of a material with a relative permeability of substantially one, such as resin. Therefore, the magnetic field generated by the core 50 easily acts on the shaft 40, thereby further improving the driving force of the linear motor 30.

If the sleeve 60 is made of a material with a comparatively high relative permeability, a magnetic path is formed inside the sleeve 60, the magnetic field generated by the core 50 becomes less likely to act on the shaft 40, and the driving force of the linear motor 30 is reduced in consequence. For this reason, it is preferable that the sleeve 60 be made of a material with a relative permeability in a range that can improve the driving force of the linear motor 30, for example, a relative permeability greater than one and equal to or less than ten. Note that a material with a relative permeability greater than one and equal to or less than ten is not limited to austenitic stainless steel, and may be any non-magnetic material with a relative permeability in such a range.

As shown in FIG. 3, the sleeve 60 also includes a slit 60C that is formed in the tube portion 60A so as to extend along an axial direction of the core 50. A circumferential width of the slit 60C is larger before the sleeve 60 is inserted into the core 50. Even if the sleeve 60 has been inserted into the core 50, the slit 60C still maintains a certain circumferential width. Therefore, in a state where the width of the slit 60C has been reduced, the tube portion 60A is reduced in outer diameter, and the sleeve 60 can easily be inserted into the inner circumferential surface 50C of the core 50. Furthermore, after the sleeve 60 has been inserted into the core 50, the sleeve 60 slightly deforms so as to increase the width of the slit 60C. This causes the sleeve 60 and the core 50 to adhere tightly to each other. As a result, the sleeve 60 is held by the core 50.

Furthermore, compared with a case in which no slit 60C is provided, the dimensional precision required for the outer diameter of the tube portion 60A is reduced. Thus, the manufacturing cost of the sleeve 60 can be reduced. The slit 60C is not limited to a configuration in which it extends linearly along the axial direction of the core 50. The slit 60C may extend spirally from one end toward the other end of the sleeve 60. Alternatively, the tube portion 60A may not have the slit 60C, that is, the tube portion 60A may be ring-shaped. In this case, the stiffness of the sleeve 60 can be improved.

As shown in FIG. 2, an inner circumferential surface of the tube portion 60A has an increasing diameter portion 60D that gradually increases in inner diameter toward the flange portion 60B. As an inner circumferential surface of an end portion of the sleeve 60 has the increasing diameter portion 60D, a tip of the shaft 40 is guided by the increasing diameter portion 60D to the interior of the tube portion 60A when installing the shaft 40 inside the core 50. Accordingly, the shaft 40 can easily be inserted into the sleeve 60. The increasing diameter portion 60D is not limited to an inclined surface that changes in diameter at a constant rate, and may be a curved surface with a constant curvature. An angle formed by the increasing diameter portion 60D and the axial direction is preferably equal to or smaller than 45°, and should be set at an angle so that the shaft 40 can be easily inserted. The increasing diameter portion 60D may be provided on an end portion of the sleeve 60 opposite to the flange portion 60B, or may be provided on both end portions of the sleeve 60. Furthermore, a tip portion of the shaft 40 that is inserted into the tube portion 60A may have an inclined surface.

A description is now given of a method of fixing the sleeve 60 in place.

First, the sleeve 60 is inserted into the core 50 to the point where the flange portion 60B is in contact with the other end surface 50B of the core 50. Then, when the inner tube 12 and the adapter main body 18 are coupled to each other, the flange portion 60B is fixed in place by being sandwiched between the wire guiding plate 19, which is pressed by the pressing portion 18A, and the other end surface 50B of the core 50.

The sleeve 60 is not limited to being fixed in place using the foregoing method. The sleeve 60 may be fixed in place by screwing the flange portion 60B to the wire guiding plate 19. Alternatively, the sleeve 60 may be fixed in place by inserting the sleeve 60 from the restriction portion 12C of the inner tube 12 and screwing the flange portion 60B to the restriction portion 12C. The sleeve 60 may be fixed in place in any manner as long as the sleeve 60 is prevented from slipping out of the inner circumferential surface 50C of the core 50.

The sleeve 60 may not include the flange portion 60B and be composed only of the tube portion 60A, in which case the sleeve 60 is fixed in place inside the core 50 by members that are provided at both ends of the sleeve 60 to hold the sleeve 60. Alternatively, the sleeve 60 may be composed of two sleeves 60 that each include a flange portion 60B, in which case the two sleeves 60 are inserted respectively from both ends of the core 50. A slight gap may be present between the two sleeves 60 that have been inserted respectively from both ends of the core 50. However, this gap is set to be as small as possible to prevent pulling of the shaft 40 toward the core 50 in an area where the gap is provided. In other words, there may be some gap between the two sleeves 60 as long as pulling of the shaft 40 toward the core 50 is restricted and eccentricity of the shaft 40 is restrained.

The following describes the operations of the linear motor 30 and the linear actuator 100.

In the linear motor 30, when the coils 51 are supplied with a current of a predetermined direction, a thrust that drives the shaft 40 in one direction (a rightward direction in FIG. 1) is generated. Along with the driving of the shaft 40 in one direction, the linear actuator 100 is extended as the outer tube 21 of the second tube 20 moves while sliding with respect to the inner tube 12 of the first tube 10.

When the linear actuator 100 has been extended to a fully extended position, the rod guide 26 is in contact with a side surface of the stopper portion 16A of the base main body 16, thereby restricting a further movement of the shaft 40. As such, the rod guide 26 functions as a stopper.

On the other hand, when the coils 51 are supplied with a current having a phase opposite to that of the current supplied during the extension, a thrust that drives the shaft 40 in the other direction (a leftward direction in FIG. 2) is generated. Along with the driving of the shaft 40 in the other direction, the linear actuator 100 is contracted as the outer tube 21 of the second tube 20 moves while sliding with respect to the inner tube 12 of the first tube 10.

When the linear actuator 100 has been contracted to a fully contracted position as shown in FIG. 1, the cap 22 is in contact with the restriction portion 12C of the inner tube 12, thereby restricting a further movement of the shaft 40.

As shown in FIG. 1, when the linear actuator 100 is at the fully contracted position, a part of the permanent magnets 41 in the shaft 40 projects farther toward the cap 22 than the coils 51 fixed to the core 50 do. As the part of the permanent magnets 41 is thus positioned beyond the coils 51 in the extension direction of the linear actuator 100 at the fully contracted position, the thrust (the electromagnetic force) that drives the shaft 40 is easily generated when extending the linear actuator 100 from the fully contracted position.

The foregoing embodiment achieves the following advantageous effects.

In the linear motor 30, the sleeve 60 formed from a non-magnetic element is disposed between the core 50 and the shaft 40 over the substantially entire length of the core 50. This restricts a radial displacement of the shaft 40, that is, pulling of the shaft 40 toward the core 50. As the sleeve 60 is disposed in the foregoing manner, the gap between the core 50 and the shaft 40 is kept substantially constant across the entire length of the core 50, and eccentricity of the shaft 40 is restrained. Therefore, the magnetic field generated by the core 50 acts uniformly on the shaft 40, thereby improving the driving force of the linear motor 30.

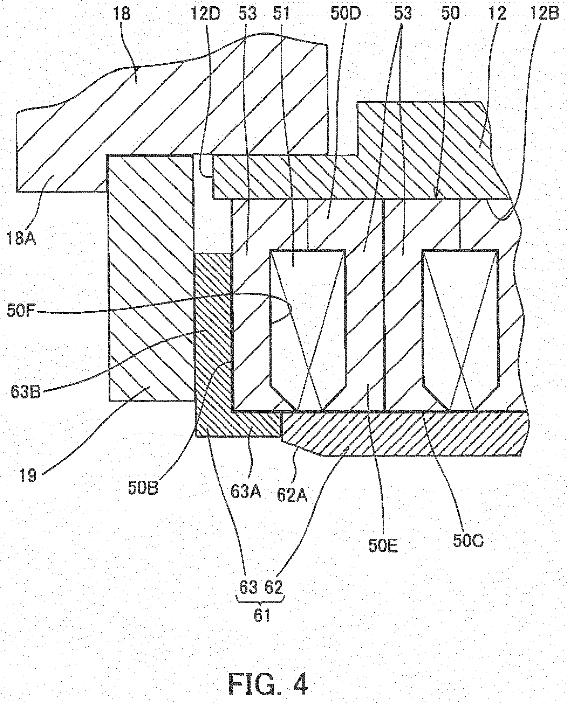

The following describes a first exemplary modification of the linear motor 30 according to the embodiment of the present invention and the linear actuator 100 having the linear motor 30 with reference to FIG. 4. FIG. 4 is a cross-sectional view corresponding to FIG. 2 according to the above-described embodiment.

In the above-described embodiment, the sleeve 60 includes the tube portion 60A and the flange portion 60B, which are formed integrally. The tube portion 60A is inserted into the inner circumferential surface 50C of the core 50, and the flange portion 60B is held between the core 50 and the wire guiding plate 19. Alternatively, as shown in FIG. 4, the sleeve 61 may be formed by separate members; specifically, a tube portion 62 that is inserted into the inner circumferential surface 50C of the core 50, and a fixing portion 63 that fixes the tube portion 62 in place inside the inner circumferential surface 50C.

The tube portion 62 is a cylindrical tube member, and has a non-illustrated slit extending in the axial direction of the core 50 similarly to the sleeve 60 according to the above-described embodiment. The tube portion 62 also has an increasing diameter portion 62A that gradually increases in inner diameter toward the fixing portion 63.

The fixing portion 63 includes a contact portion 63A and a flange portion 63B. The contact portion 63A has a shape of a cylindrical tube, and is in contact with an end surface of the tube portion 62. The flange portion 63B is provided at one end of the contact portion 63A, and projects radially outward. A radial thickness of the tube portion 62 is larger than a radial thickness of the contact portion 63A. Therefore, the shaft 40 is slidably supported by the tube portion 62. Although FIG. 4 shows only one end side of the tube portion 62, another fixing portion 63 is similarly provided at the other end side of the tube portion 62.

The radial thickness of the tube portion 62 may be the same as the radial thickness of the contact portions 63A. In this case, the shaft 40 is slidably supported by the tube portion 62 and the fixing portions 63. Furthermore, not only the tube portion 62, but also end portions of the fixing portions 63 may have the increasing diameter portion. In this case, the tip of the shaft 40 is easily guided by the increasing diameter portions to the interior of the tube portion 62 when installing the shaft 40 inside the core 50.

According to the first exemplary modification with the foregoing configuration, the tube portion 62 with a slit is inserted into the inner circumferential surface 50C of the core 50, and the contact portions 63A of the fixing portions 63 are in contact with both ends of the tube portion 62. Thus, the tube portion 62 is fixed in place inside the inner circumferential surface 50C. As described above, the sleeve 61 according to the first exemplary modification includes the tube portion 62 having the slit and the fixing portions 63 having the flange portions 63B, and the tube portion 62 and the fixing portions 63 are formed as separate members. As the slit and the flange portions are not formed in the same member, each member can easily be processed.

In the first exemplary modification, the material of the tube portion 62 may be different from the material of the fixing portions 63. For example, the tube portion 62 can be made of a material with a relative permeability greater than one and equal to or less than ten to improve the driving force of the linear motor 30 as in the above-described embodiment. On the other hand, the fixing portions 63 can be made of inexpensive resin to reduce the manufacturing cost of the linear motor 30.

In the first exemplary modification, when the linear motor 30 includes a core 50 of a different length, the sleeve 61 is installed by using a tube portion 62 of a different axial length and universal fixing portions 63. As universal components are used when the linear motor 30 includes a core 50 of a different length, the manufacturing cost of the linear motor 30 can be reduced.

One or both of the fixing portions 63 provided at both ends of the tube portion 62 may be a cylindrical tube member that is fixed in place by, for example, being press-fit onto the inner circumferential surface 50C of the core 50. By providing such a cylindrical tube member(s) on the inner circumferential surface 50C of the core 50, the tube portion 62 inserted into the inner circumferential surface 50C can be fixed in place at a predetermined position as in the above-described first exemplary modification. In this case, as the flange portions 63B do not need to be provided, the manufacturing cost can be reduced. Furthermore, such a cylindrical tube member(s) can function as a stopper that limits a movement of the tube portion 62. This makes it easy to install the tube portion 62 inside the inner circumferential surface 50C of the core 50. Note that such a cylindrical tube member(s) that functions as a stopper may be formed integrally with the circular ring members 53 composing the core 50.

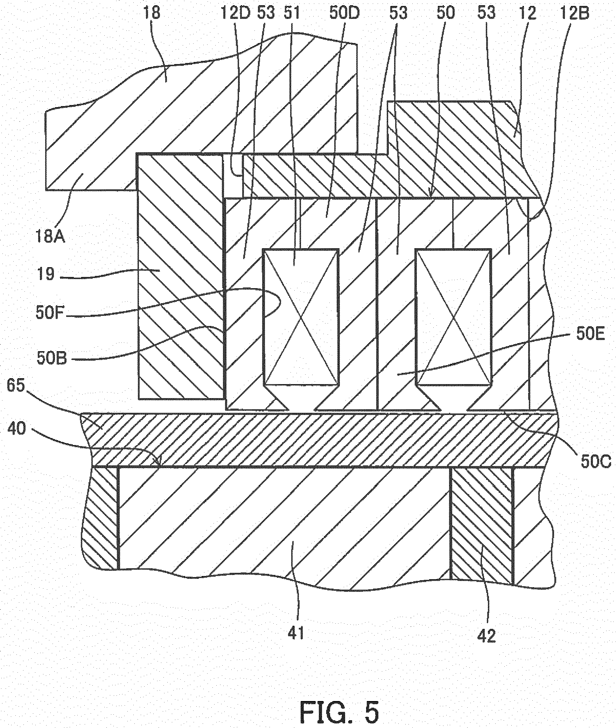

The following describes a second exemplary modification of the linear motor 30 according to the embodiment of the present invention and the linear actuator 100 having the linear motor 30 with reference to FIG. 5. FIG. 5 is a cross-sectional view corresponding to FIG. 2 according to the above-described embodiment.

In the above-described embodiment, the sleeve 60 is fixed to the core 50. Alternatively, the sleeve 60 may be replaced with a sleeve 65 that is mounted on the shaft 40 as shown in FIG. 5. The sleeve 65 is a cylindrical tube member, and is formed from a non-magnetic element similarly to the sleeve 60 according to the above-described embodiment. The sleeve 65 is provided to cover an outer circumferential surface of the shaft 40 in which the permanent magnets 41 and the yokes 42 are joined in an alternating manner. That is, the sleeve 65 is disposed in a state where the permanent magnets 41 and the yokes 42 are stacked thereinside.

The sleeve 65 moves axially inside the core 50 together with the shaft 40, and is in sliding contact with the inner circumferential surface 50C of the core 50. Therefore, if the coils 51 are placed in abutment with the inner circumferential surface 50C that is flush with the surfaces of the tips of the teeth portions 50E as in the above-described embodiment, the sleeve 65 will be in contact with the coils 51. This gives rise to the possibility that the coils 51 are cut. For this reason, in the second exemplary modification, the coils 51 are placed so as not to abut the surfaces of the tips of the teeth portions 50E as shown in FIG. 5. As a result, the coils 51 are easily installed compared with a case in which the coils 51 are placed in abutment with the surfaces of the tips of the teeth portions 50E as in the above-described embodiment.

According to the second exemplary modification with the foregoing configuration, the sleeve 65 formed from a non-magnetic element is disposed between the shaft 40 and the core 50. This restricts a radial displacement of the shaft 40, that is, pulling of the shaft 40 toward the core 50. As the sleeve 65 is mounted on the shaft 40, the gap between the core 50 and the shaft 40 is kept substantially constant across the entire length of the core 50, and eccentricity of the shaft 40 is restrained. Therefore, the magnetic field generated by the core 50 acts uniformly on the shaft 40, thereby improving the driving force of the linear motor 30.

In the second exemplary modification, the sleeve 65, which is comparatively large in thickness, is mounted on an outer circumference of the shaft 40. Accordingly, the strength of the shaft 40 can be improved.

Below is a comprehensive description of the configurations, functions, and advantageous effects of the embodiment of the present invention.

The linear motor 30 includes the hollow cylindrical core 50, the shaft 40, and the sleeve 60 (61, 65). The hollow cylindrical core 50 has a plurality of coils 51 arranged at axial intervals at the inner circumferential side thereof. The shaft 40 has a plurality of permanent magnets 41 axially aligned therein, and is axially movable inside the core 50. The sleeve 60 (61, 65) is formed from a non-magnetic element, and disposed between the core 50 and the shaft 40 over the substantially entire length of the core 50.

With this configuration, the sleeve 60 (61, 65) formed from a non-magnetic element is disposed between the core 50 and the shaft 40 across the substantially entire length of the core 50. This restricts a radial displacement of the shaft 40, that is, pulling of the shaft 40 toward the core 50. As the sleeve 60 (61, 65) is disposed in the foregoing manner, the gap between the core 50 and the shaft 40 is kept substantially constant across the entire length of the core 50, and eccentricity of the shaft 40 is restrained. Therefore, the magnetic field generated by the core 50 acts uniformly on the shaft 40, thereby improving the driving force of the linear motor 30.

Furthermore, the sleeve 60 (61) has a slit 60C extending in the axial direction of the core 50.

With this configuration, the slit 60C provided in the sleeve 60 (61) enables the sleeve 60 (61) to be easily inserted into the core 50. In addition, compared with a case in which no slit 60C is provided, the dimensional precision required for the outer diameter of the sleeve 60 (61) is reduced. Thus, the manufacturing cost of the sleeve 60 (61) can be reduced.

Furthermore, the inner circumferential surface of the end portion of the sleeve 60 (61) has the increasing diameter portion 60D (62A) that continuously increases in diameter toward the end surface of the sleeve 60 (61).

With this configuration, the inner circumferential surface of the end portion of the sleeve 60 (61) has the increasing diameter portion 60D (62A). Accordingly, the tip of the shaft 40 is guided by the increasing diameter portion 60D (62A) to the interior of the tube portion 60A (62) when installing the shaft 40 inside the core 50. As a result, the shaft 40 can easily be inserted into the sleeve 60 (61).

Furthermore, the sleeve 60 (61, 65) is made of a material with a relative permeability greater than one and equal to or less than ten.

Moreover, the sleeve 60 (61, 65) is made of austenitic stainless steel.

With these configurations, the sleeve 60 (61, 65) is made of a material with a relative permeability greater than one and equal to or less than ten. When the sleeve 60 (61, 65) is made of a material with a relative permeability greater than one and equal to or less than ten, magnetic resistance between the core 50 and the shaft 40 is reduced. Therefore, the magnetic field generated by the core 50 easily acts on the shaft 40, thereby further improving the driving force of the linear motor 30.

Furthermore, the sleeve 60 (61) is mounted on the core 50, and the core 50 has a plurality of slot portions 50F opening to the inner circumferential surface 50C and housing the coils 51. Inside the slot portions 50F, the coils 51 are placed in abutment with the inner circumferential surface 50C.

With this configuration, the coils 51 are placed inside the slot portions 50F in abutment with the inner circumferential surface 50C. As the sleeve 60 (61) is mounted on the core 50, the spaces in which the coils 51 can be placed are enlarged, and the number of turns in each coil 51 can be increased. Consequently, provided that the same amount of current is supplied, the strength of the magnetic field generated by the coils 51 increases, thereby improving the driving force of the linear motor 30.

Furthermore, the linear actuator 100 having the linear motor 30 includes the first tube 10 and the second tube 20. The first tube 10 includes the trunnion shafts 1 joined to an external member and accommodates the core 50. The second tube 20 includes the joint member 2 joined to another external member, slidably mounted on the outer circumference of the first tube 10, and fixed to one end of the shaft 40.

With this configuration, the second tube 20 fixed to one end of the shaft 40 is slidably mounted on the outer circumference of the first tube 10 accommodating the core 50. Therefore, for example, even if a radial load acts from an external member joined to the linear actuator 100, the sliding action between the first tube 10 and the second tube 20 distributes the radial load. As a result, the linear actuator 100 can be extended and contracted by a desired thrust. Furthermore, as the shaft 40 and the core 50 are protected from the outside by the first tube 10 and the second tube 20, the shaft 40 and the core 50 can be prevented from getting damaged by, for example, falling.

The embodiments of the present invention described above are merely illustration of some application examples of the present invention and not of the nature to limit the technical scope of the present invention to the specific constructions of the above embodiments.

The present application claims a priority based on Japanese Patent Application No. 2015-182836 filed with the Japan Patent Office on September 16, 2015, all the contents of which are hereby incorporated by reference.

## Claims

1. A linear motor comprising:
a hollow cylindrical core having a plurality of coils arranged at axial intervals at an inner circumferential side thereof;
a shaft having a plurality of permanent magnets axially aligned therein, the shaft being axially movable inside the core; and
a sleeve formed from a non-magnetic element, the sleeve being disposed between the core and the shaft over an entire length of the core.

2. The linear motor according to claim 1, wherein
the sleeve has a slit extending in an axial direction of the core.

3. The linear motor according to claim 1, wherein
an inner circumferential surface of an end portion of the sleeve has an increasing diameter portion that continuously increases in diameter toward an end surface of the sleeve.

4. The linear motor according to claim 1, wherein
the sleeve is made of a material with a relative permeability greater than one and equal to or less than ten.

5. The linear motor according to claim 1, wherein
the sleeve is made of austenitic stainless steel.

6. The linear motor according to claim 1, wherein
the sleeve is mounted on the core,
the core has a plurality of slots opening to an inner circumferential surface of the core and housing the coils, and
the coils are placed inside the slots in abutment with the inner circumferential surface of the core.

7. A linear actuator having the linear motor according to claim 1, comprising:
a first tube including a first joint portion joined to an external member, the first tube accommodating the core; and
a second tube including a second joint portion joined to another external member, the second tube being slidably mounted on an outer circumference of the first tube, the second tube being fixed to one end of the shaft.
